# EUROPEAN PATENT APPLICATION

(11) **EP 2 511 865 A1**
(43) Date of publication of application: **17.10.2012**
(21) Application number: 11162422.7
(22) Date of filing: 14.04.2011
(51) Int. Cl.: G06Q 10/02, G06Q 10/08

(54) **Loading / Unloading booking system**

(71) Applicant: Deutsche Post AG, 53113 Bonn (DE)
(72) Inventor: Oscar Olivares Rabadàn, 50019 Zaragoza (ES)
(74) Representative: Jostarndt, Hans-Dieter

(57) **Abstract**

The invention relates to booking system (1) for efficient loading and/or unloading process for transport vehicles (2) without the necessity to adapt the transport vehicles (2) in order to be able to apply the process and to a method to operate such a system (1). The booking system (1) comprises at least one logistic terminal (3) with multiple loading docks (31) for loading or unloading the transport vehicles (2) and a computer system (4) connected to the logistic terminal (3) providing (WP) a web portal (41) for users to access the booking system (1) and enabling users to insert (IN) booking data with car number (21) of the transport vehicle (2) and a desired time for loading or unloading the transport vehicle (2) at one of the loading docks (31) in one of the logistic terminals (3) via the web portal (41), wherein the logistic terminal (3) comprises an entry portal (32) connected to the computer system (4) to be passed (PA) by the transport vehicles (2) before accessing (A) one of the loading docks (31), which comprises a number plate reader (322) to identify (ID) the transport vehicle (2) and card providing unit (321) to provide (P) and to handover a booking card (5) to a driver of the transport vehicle (2) in response to the identified transport vehicle (2) comprising the booking data, the loading dock (31) assigned to the booking data and a time interval in accordance to the inserted booking data, during which loading and unloading shall be performed.

## Description

### Field of the invention

The invention relates to a booking system to load or unload transport vehicles and to a method to operate such a system.

### Background of the invention

The required time to transport an object from the sender to the receiver is a key factor for logistic companies. The shorter the transport time, the more effective is the use of resources of such companies such as transport vehicles, storage spaces and manpower. The time where transport vehicles do not transport objects increases the overall transport costs. Therefore the time, where the transport vehicles wait for being loaded or unloaded should be as short as possible.

Document JP 2007/297166 A discloses a loading and unloading equipment management system, where the driver of a transport vehicle is allowed to use loading/unloading equipment such as forklifts of the logistic terminal in order to perform the loading/unloading process with higher efficiency. The keys of present forklifts are made available after the driver has inserted an ID card in a release device providing a key for an available forklift to an identified driver also enabling the billing of the used forklift. To further speed up the loading/unloading process the system further recognizes the transport vehicle at an entrance gate via an RFID card carried by the driver providing transport vehicle data. In response to the vehicle data the system assigns a loading dock to the vehicle. At the loading dock also the number plate of the transport vehicle can be recognized. Such a system is limited to the drivers carrying such an RFID card, probably limited to drivers of certain transport companies. However, in case of processing different transport vehicles of different companies in a random sequence at one logistic terminal, the overall efficiency is determined by the most time consuming processing. Therefore it is desired to process all transport vehicles with the same efficiency regardless of carrying ID-cards or not in order to be most efficient. Therefore the desired system shall provide an efficient loading / unloading service independently from any precondition to the arriving transport vehicles, e.g. any mandatory cards to be already present in beforehand at the transport vehicles.

### Summary of the invention

It is an object of the invention to provide a booking system for efficient loading and/or unloading process for transport vehicles without the necessity to provide equipment to the transport vehicles or to the drivers in order to be able to apply the process.

This object is solved by a booking system to load or unload transport vehicles comprising at least one logistic terminal with multiple loading docks for loading or unloading the transport vehicles and a computer system connected to the logistic terminal providing a web portal for users to access the booking system and enabling users to insert booking data with car number of the transport vehicle and a desired time for loading or unloading the transport vehicle at one of the loading docks in one of the logistic terminals via the web portal, wherein the logistic terminal comprises an entry portal connected to the computer system to be passed by the transport vehicles before accessing one of the loading docks, which comprises a number plate reader to identify the transport vehicle and card providing unit to provide and to handover a booking card to a driver of the transport vehicle in response to the identified transport vehicle comprising the booking data, the loading dock assigned to the booking data and a time interval in accordance to the inserted booking data, during which loading and unloading shall be performed.

The booking system according to the present invention provides an efficient system to load and/or unload transport vehicles at logistic terminals. To optimize the efficiency, the booking system integrates the planning of the transportation by enabling the user to specify the time, when a transport can be expected at a logistic terminal and the loading and/or unloading process itself at the logistic terminal in one process in order to save overall process time. The process time denotes the time from entering the logistic terminal by the transport vehicle until the transport vehicle leaves the logistic terminal. Only speeding up the loading/unloading process without managing the arriving of transport vehicles at logistic terminals would not necessarily result in a better efficiency, because eventually saved time during loading/unloading might be wasted during waiting for an available empty loading docks. The system according to the present invention considers both factors and provides an integrated system to achieve an overall benefit for the user. In order to be able to load/unload a transport vehicle immediately after the transport vehicle arrives at the logistic terminal, the logistic terminal needs to know the expected arrival time and needs to organize the number and sequence of arriving transport vehicles. The latter is fulfilled by the booking system enabling the user to reserve available loading/unloading times for his transport vehicles, which depends on his own wishes and on the number of other transport vehicles to be processed (loaded and/or unloaded) at the same time. For the processing at the logistic terminal the transport vehicles do not have to be equipped in beforehand with any device in order to be able to be processed. The booking system only requires the transport vehicles to carry number plates, which is mandatory anyhow for transport vehicles to be allowed to use public roads. Therefore any transport vehicle carries number plates anyhow. Since the transport vehicles do not have to be equipped with any additional devices, any transport vehicle can participate in the booking system. Neither the driver of the transport vehicle nor the transport vehicle itself has to be equipped with devices or ID-cards to be able to participate to the booking system according to the present invention. The transporting companies operating the transport vehicles have to access the booking system e.g. via the internet at the provided web portal. As an example the web portal may be accessed via a local computer system of the user's transporting company connected to the internet or via a mobile phone of the user or an employee of the user having an internet connection. The user according to the present invention denotes a person planning the transportation of at least one transport vehicles. The user might be an employee of a transporting company or the driver of the transport vehicle.

The web portal of the booking system provides the possibility to anyone to assess the booking system independently from his location, since the internet is available all over the world. The user (customer) of the booking system is allowed to reserve a desired time to load or unload his transport vehicle at one of the loading docks in the desired logistic terminal. The desired time is the most convenient time for the user in accordance to his transport plans. The web portal may provide at least a booking window, where the user may insert his desired time. The booking window provides information to the user, which times are already booked by the user for other transport vehicles or booked from other transport companies for their transport vehicles. The information may show available days and hours at certain loading docks for the requested logistic terminals. The booking window may comprise several sub-windows providing this kind of information for different logistic terminals in different geographic locations. After selecting the desired logistic terminal and the desired loading/unloading time, the computer system will provide an inserting window to the user (customer) in order to insert necessary booking data into the computer system. The booking data may comprise the car number of the transport vehicle, the type of load, the type of transport vehicle, amount of load (e.g. number of pallets), data to identify the user (customer) of the booking system, the driver of the transport vehicle according to the booking data, mobile phone numbers of user and/or driver, e-mail address of the user etc. People skilled in the art may consider additional booking data within the scope of this invention. In another embodiment also the desired loading dock within a certain logistic terminal might be reserved as well via the booking system. After the user has completed the inserting process the user may confirm the inserted data by applying a confirmation button provided on the web portal on a suitable window. In an embodiment the computer system is arranged to send a booking confirmation to the user after having inserted or confirmed the booking data into the web portal. The web portal further provides the possibility to the user to amend the desired time for loading / unloading at any time before the transport vehicle arrives at the entry portal. So the transport companies operating the transport vehicle are able to react on unforeseen circumstances by adapting the transport planning. The computer system providing the web portal might be any suitable computer system, e.g. a computer system comprising a server for establishing the web portal. The computer system might be a server-client system, where the clients are located at least in the logistic terminals. The server might be located in a logistic terminal or in a location outside the logistic terminals. The connection between the server and the clients might be arranged via data cables and/or via wireless data connections.

The logistic terminals of the booking system all comprise an entry portal, where the transport vehicles have to drive through in order to enter the logistic terminal. The entry portal might be arranged as a door, a front gate or an archway. The entry portal may comprise a barrier blocking the entry portal until the booking card is handed over to the driver of the transport vehicle or the driver opens the barrier by inserting the booking card into a suitable reading device to open the barrier. The booking card will be provided to the driver in an automatic process, where the transport vehicle is identified via the number plate of the transport vehicle. Since the number plate of the transport vehicle is inserted into the booking system via the web portal together with booking data and the desired time for loading/unloading the transport vehicle, the computer system is able to provide these data to the card providing unit after having identified the number plate. The identification process for the number plate might be executed via a number plate reader, which might be a camera connected to a image processing unit to deliver the content of the number plate (car number) in a electronic file. This electronic file is sent to the computer system with the request to provide the data required to provide the booking card for this transport vehicle. The computer system sends these data to the card providing unit of the entry portal, where the booking card is provided in response of the received data. The handover of the booking card at the entry portal is advantageous to help the driver to find the assigned loading dock as fast as possible.

The barrier of the entry portal might be arranged to be opened in response of the provided booking card which guarantees that only transport vehicles with booking cards are able to enter the logistic terminal. Such transport vehicles are registered within the booking system for further processing. The entry portal may comprise a computer terminal connected to the computer system enabling the driver of a transport vehicle, which is non-registered within the booking system up to now, to insert booking data into the computer system at the entry portal in order to receive a booking card. In this case the user of the booking system is the driver of the transport vehicle. Nevertheless the driver may also insert booking data related to his transporting company for further process steps provided by the booking system. The booking card might be a paper document comprising relevant data such as booking data etc. printed onto the booking card. In another embodiment the booking card might be a plastic card comprising a data storage component such as a magnetic stripe or a storage chip. The booking card may comprise machine readable information such as barcodes to open a barrier at the entry portal and/or to perform a check-in / check-out procedure at the loading docks. Therefore in one embodiment the card providing unit comprises a printer to print at least parts of the booking data, the loading dock assigned to the booking data and a time interval, during which loading and unloading shall be performed, onto the booking card. The printed data might also be printed onto a plastic booking card. In another embodiment the booking card comprises a data storage area and the card providing unit comprises a card writer to transfer at least parts of the booking data and a time interval, during which loading and unloading shall be performed, to the data storage area of the booking card as a machine readable code. Such a card writer might be a common card writer as used for smart cards, chip cards, credit cards etc. The booking card will be provided to the driver via a slot within the card providing unit. The driver will take out the booking card out of the slot (handover of the booking card). Subsequently the driver drives the transport vehicle to the assigned loading docks. Which particular loading dock is assigned to the transport vehicle is present on the booking card at least in a format readable by the driver. In the exceptionally case of the assigned loading dock being currently occupied by another transport vehicle and no other loading dock is available; the driver drives the transport vehicle to a waiting area. Here the next available loading dock will be assigned automatically by the computer system to the waiting transport vehicle to accelerate the loading / unloading process.

The term "logistic terminal" denotes any area, where goods are transported to or from. The logistic terminal might be a logistic hub or a warehouse to further distribute goods to other hubs, warehouses or to the recipients. The term "logistic vehicle" denotes any kind of vehicle suitable to transport goods from a sender to a recipient. The transport vehicle might be a truck or any other suitable car. The term "car number" denotes the number present on the number plate of the transport vehicle identifying the transport vehicle.

In another embodiment the computer system is arranged to send an arrival message at least to the user of the booking system in response to identification of the transport vehicle via the number plate reader at the entry portal. Such arrival message is a confirmation for the transporting company that the transport vehicle arrived at the logistic terminal and may comprises the arrival time of the transport vehicle at the entry portal. From the comparison of the planned arrival time and the actual arrival time the transporting company can plan the further transporting routes of the transport vehicle after leaving the logistic terminal on a realistic time base. Furthermore the transporting company is able to estimate and adapted future transporting plans in response to the actual arrival time. In an embodiment, the number plate reader at the entry portal is arranged to enable an automatic identification of the transport vehicle when leaving the logistic terminal via the entry portal. The read-out of the number plate at the entry portal is recorded by the computer system with the same procedure as executed by identifying the arriving transport vehicle. Analog to the send-out arrival message, the computer system sends out a final leaving message to the user as a confirmation for the transporting company that the transport vehicle finally left the logistic terminal. In another embodiment, the read-out of the number plates of leaving transport vehicle is performed by an additional number plate reader for leaving transport vehicles at the entry portal. This additional number plate reader is suitably arranged at the entry portal to be able to read-out the number plates of leaving transport vehicles. This additional number plate reader is connected to the computer system analog to the connection for the other number plate readers. The additional number plate recognition is performed accordingly. In an alternative embodiment, the transport vehicle will be checked out at the barrier of the entry terminal by reading out the booking card at the barrier. The barrier will open in response to the read-out booking card in order to allow the transport vehicle to leave the logistic terminal via the entry portal. Also here, the leaving time is recorded by the computer system sending out the final leaving message as described above.

In another embodiment the loading dock comprises a booking card reader connected to the computer system enabling the driver to check-in and/or to check-out at the loading dock with the booking card read by the booking card reader during check-in and check-out. With the check-in and check-out, the exact duration of the loading / unloading process at the loading docks can be recorded. In one embodiment the computer system comprises a database, where any logistic data related to performed processes (e.g. loading / unloading duration) is stored for each logistic terminal and for each loading dock to provide performance data for controlling and eventually optimizing logistic processes. In case of exceptional long loading / unloading times, the computer system is arranged to highlight this event in order to provide help to the logistic terminal administration to improve their internal processes. The highlighting might be executed in case of 40%, preferably 30%, more preferably more than 20% longer loading / unloading durations compared to an average loading / unloading duration.

In an alternative embodiment the loading dock comprises a second number plate reader to identify the transport vehicle suitable to check-in and/or the check-out the transport vehicle automatically when reaching or leaving the loading dock. In this case, the driver does not have to perform any handling steps in order to record check-in and/or check-out times within the computer system. The check-in time might be recorded when the second number plate reader reads the number plate of the particular transport vehicle for the first time. The read-out of the number plate might be executed periodically. The check-out time might be recorded subsequently, when the previously read number plate cannot be recognized anymore. In another embodiment, the number plate reader might be arranged in such a way, that it either can read the number plate when the transport vehicle arrives at the loading dock or when it leaves the loading dock. Correspondingly, check-in or check-out times are determined and recorded within the computer system. The purpose of recording check-in times and check-out times is the same as for the previous embodiments

In another embodiment the computer system is arranged to send out a message, preferably a SMS-message or an e-mail message, at least to the driver in response to the recognized check-out. In a preferred embodiment the message is also send to the user inserting the booking data. The message is on one hand a confirmation for the driver for third parties, that he indeed left the loading dock at the check-out time. The driver can use this confirmed time to update the recorded stops along his transporting route. Furthermore the drive may forward the message to his transporting company in order to support the further transport planning of his transporting company. The message can be sent out in any suitable format. However, SMS messages or e-mails can easily be established and send-out automatically and can easily be received around the world. If the message, e.g. in form of an e-mail, is also sent to the user, commonly a manager of the transporting company operating the transport vehicle driven by the driver, in order to avoid any additional handling of the driver such as forwarding messages and to precisely inform the transporting company about the leaving time for this transport vehicle.

In another embodiment the logistic terminal further comprises a visual guiding system to guide the transport vehicle to the assigned loading dock in order to support the driver to arrive at the assigned loading docks as fast as possible. The guiding system is connected to the computer system and the entry portal (directly or via the computer system) via a data connection to be able to guide the transport vehicle just having received the booking card. In a preferred embodiment the visual guiding system comprises a traffic light signalizing the driver the status of the loading dock (e.g. red light = occupied loading dock, yellow light = prepare for approaching the loading dock, green light = empty loading docks waiting for the next transport vehicle) and a display displaying the number plate of the next assigned transport vehicle according to the booking cards. The display having a suitable size to be recognizable from a distance of more than 10 meters, preferably of 100 meters, might be arranged beside or above the loading docks facing towards the transport vehicles approaching the loading docks. In a preferred embodiment an SMS message is sent additionally to the driver to advise him to drive the transport vehicle to the assigned loading dock. This could advantageous, if the transport vehicle is waiting for an empty loading dock in a waiting area, which does not provide free view to all of the loading docks.

The invention further relates to a method to operate the booking system according to the present invention comprising at least one logistic terminal with multiple loading docks for loading or unloading the transport vehicles comprising the steps of:
- providing a web portal by a computer system connected to the logistic terminals for users to access the booking system,
- inserting booking data with car number of the transport vehicle and a desired time for loading or unloading the transport vehicle at one of the loading docks in one of the logistic terminals into the computer system by the user via the web portal,
- passing an entry portal of the logistic terminal connected to the computer system with the transport vehicles before accessing one of the loading docks, where the following steps are preformed:
- identifying the transport vehicle via a number plate reader at the entry portal, and
- providing and handing over a booking card to a driver of the transport vehicle at the entry portal with a card providing unit in response to the identified transport vehicle comprising the booking data, the loading dock assigned to the booking data and a time interval, during which loading and unloading shall be performed.

In an embodiment the method further comprises the step of sending an arrival message at least to the user of the booking system in response to identified transport vehicle at the entry portal by the computer system.

In another embodiment the method further comprises at least one of the steps of
- checking-in the transport vehicle by inserting the booking card into a booking card reader at the loading dock or by automatically identifying the transport vehicle with a second number plate reader at the loading dock when reaching the loading dock, and/or
- checking-out the transport vehicle by inserting the booking card into a booking card reader at the loading dock or by automatically identifying the transport vehicle with a second number plate reader at the loading dock when leaving the loading dock.

In another embodiment the method further comprises the step of sending out a message by computer system, preferably an SMS-message or an e-mail message, at least to the driver in response to the recognized check-out; preferably the message is also send to the user inserting the booking data. Therefore the computer system is arranged to generate such messages and is equipped with sending means (e.g. a radio module or an e-mail system such as Microsoft Outlook) to send-out such messages.

In another embodiment the method further comprising the step of guiding the transport vehicle to the assigned loading dock by a visual guiding system comprises a traffic light signalizing the driver the status of the loading dock and a display displaying the number plate of the next assigned transport vehicle according to the booking cards.

In another embodiment the method further comprises the step of additionally sending an SMS message to the driver advising him to drive the transport vehicle to the assigned loading dock. Therefore the SMS message comprises the required loading dock data, e.g. the number of the loading dock or preferably additionally the location of the loading dock. The location of the loading dock might be displayed on the mobile phone of the driver via a map provided by a map service, where the location is added as an indicating symbol in response of the received SMS, where the SMS comprises the required control data to open such map and the corresponding indicating symbol. Suitable control data to provide this service could be generated in accordance to the machine-to-machine technology.

### Brief description of the drawings

These and other aspects of the invention will be apparent from and elucidated with reference to the embodiments described hereinafter.
- Fig.1:: shows an embodiment of the booking system according to the present invention.
- Fig.2:: shows an embodiment of the booking card according to the present invention.
- Fig.3:: shows an embodiment of the loading dock according to the present invention.
- Fig.4:: shows an embodiment of the method to operate the booking system according to the present invention.

### Detailed description of embodiments

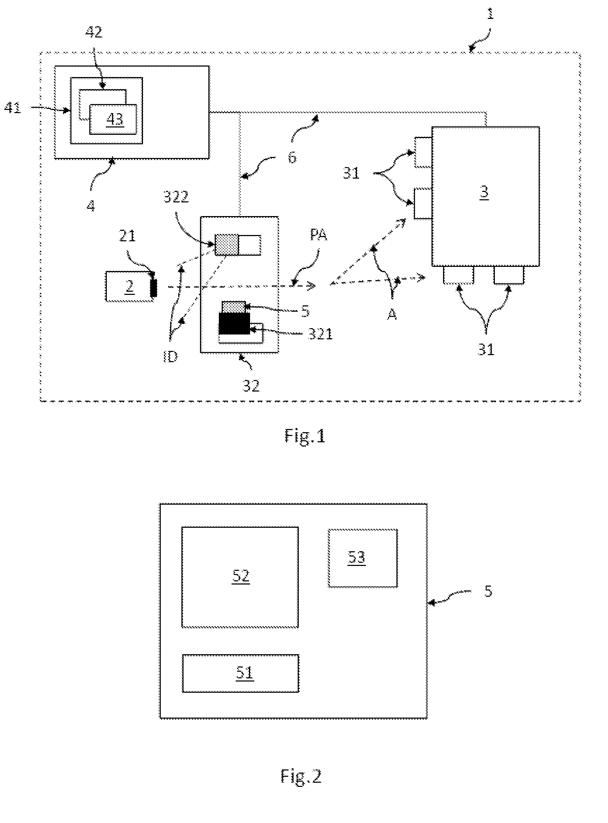

Figure 1 shows an embodiment of the booking system 1 according to the present invention. In this example the booking system 1 comprises one logistic terminal 3 with four loading docks 31 for loading or unloading the transport vehicles 2. In other embodiments, the number of logistic terminals 3 within the booking system 1 and the number of loading docks 31 per logistic terminal 3 may vary. The booking system 1 further comprises a computer system 4 connected to the logistic terminal 3 via a data connection 6 providing a web portal 41 (e.g. via the internet) for users to access the booking system 1 and enabling users to insert IN booking data with car number 21 of the transport vehicle 2 in an inserting window 43 and a desired time for loading or unloading the transport vehicle 2 at one of the loading docks 31 in the logistic terminals 3 in a booking window 42 of the web portal 41. The logistic terminal 3 further comprises an entry portal 32 connected to the computer system 4 via a data connection 6 to be passed PA by the transport vehicles 2 before accessing A one of the loading docks 31. Before being able to pass PA the entry portal 32, the transport vehicle 2 is identified ID by a number plate reader 322 reading the number plate 21 which comprises the car number. In response to the executed identification, a card providing unit 321 provides and handover a booking card 5 to the driver of the transport vehicle 2. The card providing unit 321 may comprise a printer to print at least parts of the booking data, the loading dock 31 assigned to the booking data and a time interval, during which loading and unloading shall be performed, onto the booking card 5. The card providing unit 321 may also comprise a card writer to transfer at least parts of the booking data and a time interval, during which loading and unloading shall be performed, to the booking card 5 as a machine readable code.
Fig.2 shows an embodiment of the booking card 5 according to the present invention. The booking card 5 in this example comprises a data storage area 51 to store the booking data and a time interval, during which loading and unloading shall be performed, as a machine readable code. The data were transmitted from the card providing unit 321. The booking card 5 additionally comprises a data area 52, where the booking data BD and all the other data DT. 21 might be present in a common readable format. Additionally the booking card comprises another readable area 53, where at least parts of the booking data and/or other data are present in a machine readable format able to be read-out with the booking card reader at the loading dock 31 and/or at the barrier at the entry portal. Only one of the readable area 53 and the storage area 51 are required to read-out the booking card at the booking card reader and/or at the barrier. In other embodiments the booking card might be a printed sheet of paper comprising the areas 52 and 53 to provide the same functionality. The size of the booking card 5 as well as the content present on the booking card 5 may be chosen appropriate by people skilled in the art.

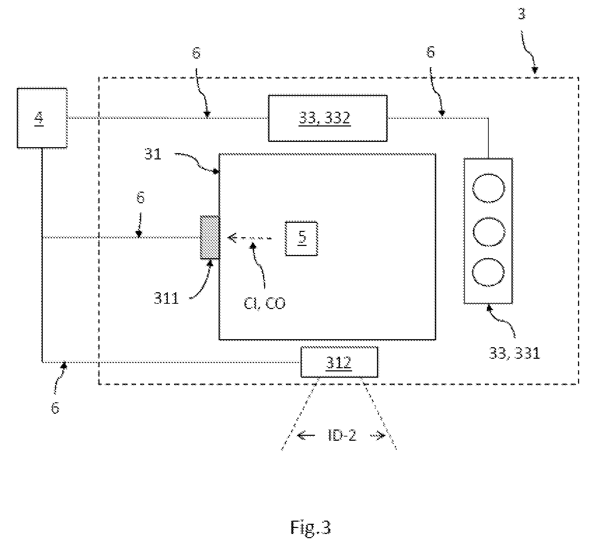

Fig.3 shows an embodiment of the loading dock 31 according to the present invention. The loading dock 31 of the logistic terminal 3 comprises a booking card reader 311 connected to the computer system 4 via a data connection 6 enabling the driver to check-in CI and/or to check-out CO at the loading dock 31 with the booking card 5 read by the booking card reader 311. Alternatively the loading dock 31 comprises a second number plate reader 312 connected to the computer system 4 via a data connection 6 to identify ID-2 the transport vehicle 2 for performing check-in CI and/or check-out CO of the transport vehicle 2 automatically when reaching or leaving the loading dock 31. Furthermore a visual guiding system 33 connected to the computer system 4 via a data connection 6 is arranged at the loading dock 31 comprising a traffic light 331 signalizing the driver the status of the loading dock 31 and a display 332 displaying the number plate 21 of the next assigned transport vehicle 2 according to the booking cards 5.

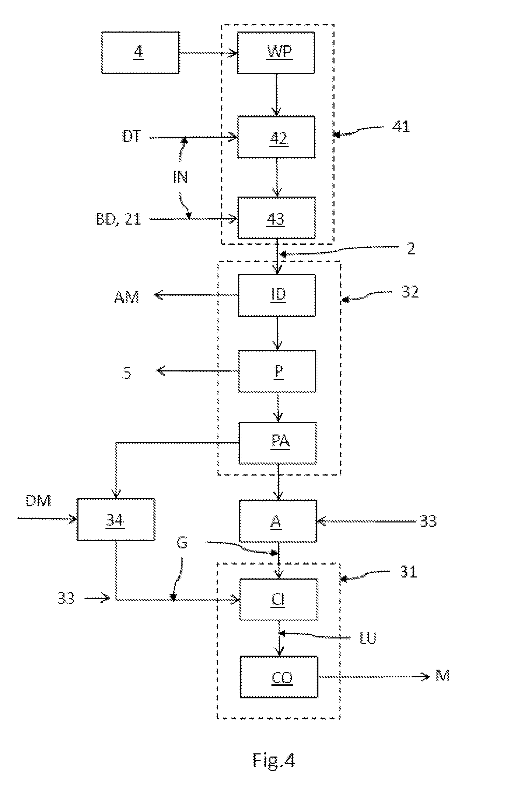

Fig.4 shows an embodiment of the method to operate the booking system 1 according to the present invention. The computer system 4 connected to the logistic terminals 3 and the entry portal 32 provides WP a web portal 41 for users to access the booking system 1. The user inserts IN a desired time DT for loading or unloading the transport vehicle 2 at one of the loading docks 31 in one of the logistic terminals 3 in a booking window 42 of the web portal 41. After making the time reservation, the web portal provides an inserting window 43 to insert IN the booking data BD with car number 21 of the transport vehicle 2 and other related data required by the web portal. When the transport vehicle 2 approaches the entry portal 32 it will be identified ID via a number plate reader 322 reading the number plate 21 with the car number at the entry portal 32. In response to the successful executed identification ID, an arrival message AM is sent out by the computer system 4 at least to the user of the booking system 1 and the booking card 5 is provided P and handed over to a driver of the transport vehicle 2 by a card providing unit 321 as part of the entry portal 32. The booking card 5 comprises the booking data BD, the loading dock 31 assigned to the booking data BD and a time interval, during which loading and unloading shall be performed. The booking card 5 can be used to open the entry portal in case of being blocked by a barrier preventing transport vehicles 2 passing the entry portal 32 without being registered within the booking system 1. With the received booking card 5 the transport vehicle 2 passes PA the entry portal 32 of the logistic terminal 3 and accesses A the assigned loading dock 31. In case of the assigned loading docks 31 being still occupied by a previous transport vehicle, the transport vehicle 2 will drive to a waiting area 34 to wait for the empty loading dock 31. In case of a transport vehicle 2 waiting in the waiting area 34, an SMS message DM is sent to the driver advising him to drive the transport vehicle 2 to the assigned loading dock 31, when the assigned loading dock 31 is empty. The transport vehicle 2 driving to the loading dock 31 is guided G by a visual guiding system 33 in order to accelerate the positioning of the transport vehicle 2 in the loading / unloading position in front of the loading dock 31. After reaching the loading dock 31, a check-in CI of the transport vehicle 2 is performed by either inserting the booking card 5 into a booking card reader 311 at the loading dock 31 or by automatically identifying ID-2 the transport vehicle 2 with a second number plate reader 312 at the loading dock 31 when reaching the loading dock 31. After having checked-in, the transport vehicle 2 is loaded and/or unloaded LU. Correspondingly a check-out CO of the transport vehicle 2 is performed by either again inserting the booking card 5 into a booking card reader 311 or by automatically identifying ID-2 that the transport vehicle 2 has left utilizing the second number plate reader 312 at the loading dock, which cannot read the number plate 21 anymore since the transport vehicle 2 is gone. After the check-out a message M is send by computer system, preferably an SMS-message M or an e-mail message M, at least to the driver comprising at least the check-out time. Preferably the message M is also sent to the user having inserted IN the booking data to support this user to further plan transport routes for the left transport vehicle 2.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

LIST OF NUMERALS
- 1: booking system
- 2: transport vehicle
- 21: car number / number plate
- 3: logistic terminal
- 31: loading dock
- 311: booking card reader
- 312: second number plate reader
- 32: entry portal
- 321: card providing unit
- 322: number plate reader
- 33: visual guiding system
- 331: traffic light at the loading docks
- 332: display at the loading docks
- 34: waiting area
- 4: computer system
- 41: web portal
- 42: booking window
- 43: inserting window
- 5: booking card
- 51: storage area of booking card
- 52: area for other data
- 53: machine readable information
- 6: data connection

- A: accessing the loading docks with the transport vehicle
- AM: arrival message
- BD: booking data
- CI: check-in
- CO: check-out

- DM: message to advice the driver to drive to the loading dock
- DT: desired time for loading / unloading
- ID: identifying the transport vehicle (via the car number / number plate) at the entry portal
- ID-2: identifying the transport vehicle (via the car number / number plate) at the loading dock
- IN: inserting booking data and other data into the computer system
- LU: loading / unloading the transport vehicle
- M: message informing that transport vehicle left loading dock
- P: providing the booking card to the driver
- PA: passing the entry portal with the transport vehicle
- WP: providing a web portal by the computer system

## Claims

1. A booking system (1) to load or unload transport vehicles (2) comprising at least one logistic terminal (3) with multiple loading docks (31) for loading or unloading the transport vehicles (2) and a computer system (4) connected to the logistic terminal (3) providing (WP) a web portal (41) for users to access the booking system (1) and enabling users to insert (IN) booking data with car number (21) of the transport vehicle (2) and a desired time for loading or unloading the transport vehicle (2) at one of the loading docks (31) in one of the logistic terminals (3) via the web portal (41), wherein the logistic terminal (3) comprises an entry portal (32) connected to the computer system (4) to be passed (PA) by the transport vehicles (2) before accessing (A) one of the loading docks (31), which comprises a number plate reader (322) to identify (ID) the transport vehicle (2) and card providing unit (321) to provide (P) and to handover a booking card (5) to a driver of the transport vehicle (2) in response to the identified transport vehicle (2) comprising the booking data, the loading dock (31) assigned to the booking data and a time interval in accordance to the inserted booking data, during which loading and unloading shall be performed.

2. The booking system (1) according to claim 1,
**characterized in that,**
the card providing unit (321) comprises a printer to print at least parts of the booking data, the loading dock (31) assigned to the booking data and a time interval, during which loading and unloading shall be performed, onto the booking card (5).

3. The booking system (1) according to claim 1 or 2,
**characterized in that,**
the booking card (5) comprises a data storage area (51) and the card providing unit (321) comprises a card writer to transfer at least parts of the booking data and a time interval, during which loading and unloading shall be performed, to the data storage area (51) of the booking card (5) as a machine readable code.

4. The booking system (1) according to any preceding claim,
**characterized in that,**
the computer system (4) is arranged to send an arrival message (AM) at least to the user of the booking system (1) in response to identification (ID) of the transport vehicle (2) via the number plate reader (322) at the entry portal (32).

5. The booking system (1) according to any preceding claim,
**characterized in that,**
the loading dock (31) comprises a booking card reader (311) connected to the computer system (4) enabling the driver to check-in (CI) and/or to check-out (CO) at the loading dock (31) with the booking card (5) read by the booking card reader (311) during check-in and check-out.

6. The booking system (1) according to claim 5,
**characterized in that,**
the loading dock (31) comprises a second number plate reader (312) to identify the transport vehicle (2) suitable to check-in (CI) and/or the check-out (CO) the transport vehicle (2) automatically when reaching or leaving the loading dock (31).

7. The booking system (1) according to claim 5 or 6,
**characterized in that,**
the computer system (4) is arranged to send out a message (M), preferably an SMS-message (M) or an e-mail message (M), at least to the driver in response to the recognized check-out, preferably the message (M) is also send to the user inserting the booking data.

8. The booking system (1) according to any preceding claim,
**characterized in that,**
the logistic terminal (3) further comprises a visual guiding system (33) to guide the transport vehicle (2) to the assigned loading dock (31).

9. The booking system (1) according to claim 8,
**characterized in that,**
the visual guiding system (33) comprises a traffic light (331) signalizing the driver the status of the loading dock (31) and a display (332) displaying the number plate (21) of the next assigned transport vehicle (2) according to the booking cards (5), preferably additionally sending an SMS message (DM) to the driver advising him to drive the transport vehicle (2) to the assigned loading dock (31).

10. A method to operate the booking system (1) according to claim 1 comprising at least one logistic terminal (3) with multiple loading docks (31) for loading or unloading the transport vehicles (2) comprising the steps of:
- providing (WP) a web portal (41) by a computer system (4) connected to the logistic terminals (3) for users to access the booking system (1),
- inserting (IN) booking data with car number (21) of the transport vehicle (2) and a desired time for loading or unloading the transport vehicle (2) at one of the loading docks (31) in one of the logistic terminals (3) into the computer system (4) by the user via the web portal (41),
- passing (PA) an entry portal (32) of the logistic terminal (3) connected to the computer system (4) with the transport vehicles (2) before accessing (A) one of the loading docks (31), where the following steps are performed:
- identifying (ID) the transport vehicle (2) via a number plate reader (322) at the entry portal (32), and
- providing (P) and handing over a booking card (5) to a driver of the transport vehicle (2) at the entry portal (32) with a card providing unit (321) in response to the identified transport vehicle (2) comprising the booking data, the loading dock (31) assigned to the booking data and a time interval, during which loading and unloading shall be performed.

11. A method according to claim 10 further comprising the step of sending an arrival message (AM) at least to the user of the booking system (1) in response to identified transport vehicle (2) at the entry portal (32) by the computer system (4).

12. A method according to claim 10 or 11 further comprising at least one of the steps of
- checking-in (CI) the transport vehicle (2) by inserting the booking card (5) into a booking card reader (311) at the loading dock (31) or by automatically identifying (ID-2) the transport vehicle (2) with a second number plate reader (312) at the loading dock (31) when reaching the loading dock (31), and/or
- checking-out (CO) the transport vehicle (2) by inserting the booking card (5) into a booking card reader (311) at the loading dock (31) or by automatically identifying (ID-2) the transport vehicle (2) with a second number plate reader (312) at the loading dock (31) when leaving the loading dock (31).

13. A method according to claim 12 further comprising the step of sending out a message (M) by computer system, preferably an SMS-message (M) or an e-mail message (M), at least to the driver in response to the recognized check-out (CO), preferably the message (M) is also sent to the user inserting (IN) the booking data.

14. A method according to any of claims 10 to 13 further comprising the step of guiding (G) the transport vehicle (2) to the assigned loading dock (31) by a visual guiding system (33) comprises a traffic light (331) signalizing the driver the status of the loading dock (31) and a display (332) displaying the number plate (21) of the next assigned transport vehicle (2) according to the booking cards (5).

15. A method according to claim 14 further comprising the step of additionally sending an SMS message (DM) to the driver advising him to drive the transport vehicle (2) to the assigned loading dock (31).
